(19) Europäisches Patentamt
European Patent Office
Office européen des brevets

(11) EP 1 674 509 B1

(12) EUROPEAN PATENT SPECIFICATION

(45) Date of publication and mention of the grant of the patent:
**12.12.2007 Bulletin 2007/50**

(51) Int Cl.:
*C08J 7/00* (2006.01)

(21) Application number: 04792624.1

(22) Date of filing: 13.10.2004

(86) International application number:
**PCT/JP2004/015458**

(87) International publication number:
**WO 2005/035636 (21.04.2005 Gazette 2005/16)**

(54) **PROCESS FOR PRODUCING METAL NANOPARTICLE COMPOSITE FILM**

VERFAHREN ZUR HERSTELLUNG VON METALLNANOPARTIKEL-VERBUNDFOLIE

PROCEDE DE FABRICATION D'UN FILM COMPOSITE DE NANOPARTICULES DE METAL

(84) Designated Contracting States:
**DE FR GB**

(30) Priority: **14.10.2003 JP 2003353130**

(43) Date of publication of application:
**28.06.2006 Bulletin 2006/26**

(73) Proprietor: **Japan Science and Technology Agency**
**Kawaguchi-shi,**
**Saitama 332-0012 (JP)**

(72) Inventors:
• **TOMITA, Satoshi**
**Nerima-ku, Tokyo 177-0031 (JP)**

• **NAWAFUNE, Hidemi**
**Takatsuki-shi, Osaka 569-1121 (JP)**
• **AKAMATSU, Kensuke**
**Nagaokakyou-shi, Kyoto 617-0816 (JP)**

(74) Representative: **TBK-Patent**
**Bavariaring 4-6**
**80336 München (DE)**

(56) References cited:
**EP-A- 1 514 845        WO-A-01/66653**
**JP-A- 2003 082 475**

**Description**

Technical Field

The present invention relates to a process for producing a metal nanoparticle composite film containing metal nanoparticles dispersed in a polyimide resin film, and also relates to an apparatus for producing the metal nanoparticle composite film.

Background art

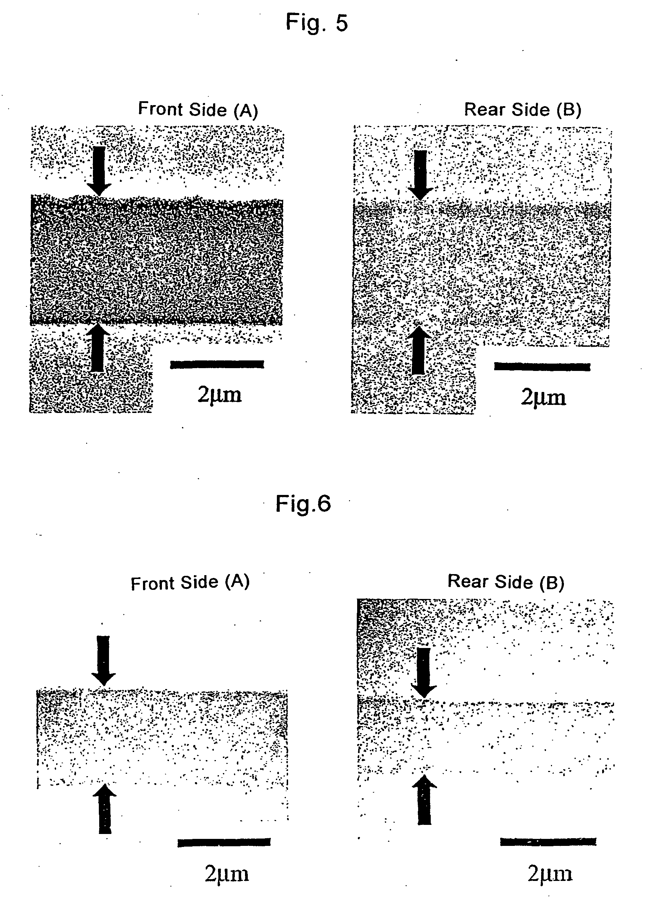

A substance formed by embedding nanoparticles with diameters in the range of several to several tens nanometers in a matrix (film), which is made of a material different from the nanoparticle material, is called a metal nanoparticle composite film (see Fig. 4). For example, a substance formed by embedding nanoparticles of a ferromagnetic metal, e.g., iron or nickel, in a matrix is called a ferromagnetic metal nanoparticle composite film. The ferromagnetic metal nanoparticle composite film has recently received attention from the viewpoint of potential application to a superhigh density magnetic recording medium, such as a hard disk.

EP 1 514 845 A1, a post-published prior art document according to Art. 54(3)(4) EPC, describes a method for synthesizing nano-sized metal oxide-containing particles in a plasma process comprising vapour phase reacting a metal halide and oxygen in the presence of a source of hydrogen in an amount sufficient to form metal oxide nanoparticles.

WO 01/66653 A1 describes a treatment of a surface of a substrate with a disilylated secondary amine compound for preparing an oxygen barrier coating.

Generally, properties of the nanoparticle composite film are decided depending on (1) the material properties, (2) the particle diameter, (3) the volume filling ratio, etc. of nanoparticles constituting the composite film. In particular, the particle diameter and the volume filling ratio are important parameters giving a significant influence upon the particle-to-particle interactions. In order to realize a nanoparticle composite film having the desired properties and characteristics, therefore, it is essential to control the nanoparticle diameter and the volume filling ratio independently of each other.

Process for producing the nanoparticle composite film are mainly divided into two types, i.e., a bottom-up process of stacking atoms and molecules to thereby produce nanoparticles, and a top-down process of cutting through a bulk.

The bottom-up process for producing the nanoparticle composite film is practiced, for example, by a self-assembly process using colloid, a molecular beam epitaxy (MBE) process, or a sputtering process. However, those processes have a difficulty in independently controlling the particle diameter and the volume filling ratio of the nanoparticles constituting the composite film.

On the other hand, typical examples of the top-down process for producing the nanoparticle composite film are a photolithography process and an electron beam lithography process. These processes are able to independently control the particle diameter and the volume filling ratio. In the state of the art, however, the particle diameter is limited to a level of several tens nanometers at a minimum and is difficult to control at a level of several nanometers.

Apart from the above-mentioned processes, the inventors found and previously proposed a process capable of producing a metal nanoparticle composite film containing metal nanoparticles dispersed in a polyimide resin film, the process comprising the steps of (a) treating the polyimide resin film with an alkali aqueous solution such as a calcium hydroxide aqueous solution to thereby introduce a carboxyl group, (b) bringing the resin film into contact with a solution containing metal ions, e.g., nickel or copper ions, to thereby dope the metal ions in the resin film, and (c) performing thermal reduction treatment in a reducing gas. (See Japanese Patent Laid-Open No. 2003-82475, Chem. Mater. 2003, Vol. 15, pp. 2488-2491, and Eur. Phys. J. D Vol. 24, pp. 377-380 (2003))

The proposed process is able to produce the composite film containing the metal nanoparticles uniformly dispersed in the polyimide resin film, and to control the diameter of the metal nanoparticle by regulating the temperature of the heat treatment.

However, the volume filling ratio of the metal nanoparticles in the composite film produced by the proposed process is hard to control, and the proposed process has a difficulty in producing the composite film with the desired properties. Further, it is also difficult to form metal-nanoparticle dispersed layers having the same thickness on both the front and rear surfaces of the composite film.

Accordingly, an object of the present invention is to solve the problems in the process for producing the composite film, which is described in the above-cited Patent Document and Non-Patent Documents, and to provide a process for producing a metal nanoparticle composite film, which is capable of independently controlling the particle diameter and the volume filling ratio of metal nanoparticles in the metal nanoparticle composite film.

Disclosure of the Invention

As a result of conducting intensive studies, the inventors have accomplished the present invention based on the findings that (1) the diameter of the metal nanoparticle in the metal nanoparticle composite film is decided by the first alkali treatment and the particle diameter is not changed after a metal-nanoparticle dispersed layer has been formed by the heat treatment in the reducing gas, and that (2) the volume filling ratio of the metal nanoparticles in the composite film can be controlled by regulating the thickness of the metal-nanoparticle dispersed layer through the thermal decomposition of polyimide serving as a matrix.

More specifically, to solve the above-described problems, the present invention is constituted as stated in the following aspects (1) to (7).

1. A process for producing a metal nanoparticle composite film containing metal nanoparticles dispersed in a polyimide resin film as defined in claim 1. The process comprises the steps of (a) treating the polyimide resin film with an alkali aqueous solution to thereby introduce a carboxyl group, (b) bringing the resin film into contact with a solution containing metal ions, to thereby dope the metal ions in the resin film, and (c) performing thermal reduction treatment in a reducing gas at a temperature not lower than the reduction temperature of the metal ions, to thereby form a layer containing the metal nanoparticles dispersed in a polyimide resin, and performing another heat treatment at a temperature different from the temperature of the aforesaid heat treatment, to thereby regulate the thickness of the metal-nanoparticle dispersed layer. Thus, the metal nanoparticle composite film containing the metal nanoparticles dispersed in the polyimide resin film is obtained, wherein the volume filling ratio of the metal nanoparticles in the composite film is controlled by regulating the thickness of a nanoparticle dispersed layer formed in the polyimide resin film with the thermal reduction treatment in the reducing gas in said step (c).

2. A process for producing a metal nanoparticle composite film according to above 1, wherein the heat treatment after the formation of the metal-nanoparticle dispersed layer is performed at temperature lower than the temperature at which the metal-nanoparticle dispersed layer has been formed.

3. A process for producing a metal nanoparticle composite film according to above 1, wherein the heat treatment after the formation of the metal-nanoparticle dispersed layer is performed at temperature higher than the temperature at which the metal-nanoparticle dispersed layer has been formed.

4. A process for producing a metal nanoparticle composite film according to any one of above 1 to 3, wherein the heat treatment after the formation of the metal-nanoparticle dispersed layer is performed in an inert gas.

5. A process for producing a metal nanoparticle composite film according to any one of above 1 to 4, wherein an aqueous solution of potassium hydroxide or sodium hydroxide is used as the alkali aqueous solution in the step (a).

6. A process for producing a metal nanoparticle composite film according to any one of above 1 to 5, wherein the solution containing the metal ions used in the step (b) contains one or more kinds of metal ions selected from among nickel, cobalt and iron.

7. A process for producing a metal nanoparticle composite film according to any one of above 1 to 6, wherein the reducing gas used in the step (c) is a hydrogen gas.

Brief Description of the Invention

Fig. 1 is a schematic view showing one example of an apparatus for producing a metal nanoparticle composite film according to the present invention.

Fig. 2 shows one example of a sample stage disposed inside a reduction treatment chamber in the apparatus of Fig. 1; specifically, Fig. 2(A) is a plan view and Fig. 2(B) is a front view.

Fig. 3 is a schematic view showing one example of a sample stage used in the prior art.

Fig. 4 is an illustration for explaining the metal nanoparticle composite film.

Fig. 5 shows a cross-sectional photo image of a composite film produced according to Reference Example 1, which was taken by a transmission electron microscope; specifically, Fig. 5(A) shows a cross-section of the composite film on the front side and Fig. 5(B) shows a cross-section of the composite film on the rear side.

Fig. 6 shows a cross-sectional photo image of a composite film produced according to Reference Example 2, which was taken by the transmission electron microscope; specifically, Fig. 6(A) shows a cross-section of the composite film on the front side and Fig. 6(B) shows a cross-section of the composite film on the rear side.

Fig. 7 is a graph showing the relationship between the volume filling ratio of nickel nanoparticles in the composite film and the heat treatment time in Reference Example 3.

Fig. 8 shows a cross-sectional photo image of a composite film produced according to Example 1, which was taken by the transmission electron microscope; specifically, Fig. 8(A) shows a cross-sectional photo image near the surface of the composite film on one side and Fig. 8(B) shows a photo image of a nickel-nanoparticle dispersed layer in Fig. 8(A) with a high magnification.

Fig. 9 is a graph showing changes in diameter of the nickel-nanoparticle with respect to a KOH treatment time in Example 1.

Fig. 10 shows a cross-sectional photo image of a composite film produced according to Example 2, which was taken by the transmission electron microscope; specifically, Fig. 10(A) shows a cross-sectional photo image near the surface of the composite film on one side and Fig. 10(B) shows a photo image of a nickel-nanoparticle dispersed layer in Fig. 10(A) with a high magnification.

Fig. 11 shows a cross-sectional photo image of a composite film produced according to Example 3, which was taken by the transmission electron microscope; specifically, Fig. 11(A) shows a cross-sectional photo image near the surface of the composite film on one side and Fig. 11(B) shows a photo image of a nickel-nanoparticle dispersed layer in Fig. 11(A) with a high magnification.

Best Mode for Carrying out the Invention

Steps for producing a metal nanoparticle composite film in a polyimide resin film according to the present invention will be described in detail below.

According to the present invention, in a first step (a), a polyimide resin film is treated with an alkali aqueous solution, such as an aqueous solution of potassium hydroxide or sodium hydroxide, to thereby cleave an imide ring of polyimide resin and introduce a carboxyl group in the polyimide resin film.

The concentration of alkali hydroxide is set to about 1 - 10 mol/liter, in particular preferably about 3 - 7 mol/liter. The polyimide resin film is immersed in the aqueous solution at temperature of about room temperature - 80 °C, preferably about 40 - 60 °C, for a period of about 1 - 60 minutes, preferably about 3 - 10 minutes, whereby the carboxyl group is introduced in the polyimide resin film.

In a next step (b), the polyimide resin film in which the carboxyl group has been introduced (hereinafter referred to also as a "modified polyimide resin film") is brought into contact with a solution containing positive metal ions, to thereby dope the positive metal ions in a modified layer (i.e., a layer containing the carboxyl group) of the modified polyimide resin film through the positive ion exchange reaction of the carboxyl group.

As the solution containing the positive metal ions is preferably used a solution containing one or more kinds of metal ions selected from among nickel, cobalt, iron, copper and platinum. The selected metal ions are finally dispersed as metal nanoparticles in the composite film.

The metal ions are generally mixed as a metal salt in the metal-ion containing solution. The kind of the metal salt used here is not limited to particular one so long as the metal salt has appropriate solubility depending on the kind of metal. In the case of nickel ions, for example, the metal ions can be mixed in the form of, e.g., nickel chloride, nickel sulfate, nickel nitrate, or nickel acetate.

The concentration of metal ions in the metal-ion containing solution is usually suitable in the range of about 0.001 - 1.5 mol/liter, preferably about 0.01 - 1 mol/liter, and more preferably about 0.1 - 1 mol/liter.

The metal-ion containing solution is generally used in the form of an aqueous solution. Depending on the kind of metal ions used, however, an organic solvent, such as methanol, can also be used.

Further, as the occasion requires, a buffer agent for maintaining a proper pH, a complexing agent for preventing precipitation of the metal ions, etc. can also be mixed in the metal-ion containing solution.

With the reaction between the ion exchange group and the metal ion, the pH of the metal-ion containing solution is gradually reduced. In the case of replenishing the metal ions with addition of a hydroxide, therefore, it is desired that the pH of the metal-ion containing solution be regulated to a value ranging from weak acidity to neutrality, in practice to a pH range of about 2 - 6, preferably about 3 - 4.

A process for contacting the metal-ion containing solution and the modified polyimide resin film with each other is not limited to particular one, and usually the resin film is immersed in the metal-ion containing solution. With that treatment, the metal ion is coupled to or adsorbed in the ion exchange group contained in the resin film. The immersion treatment is performed at temperature of, e.g., about 20 - 80 °C, preferably about 25 - 80 °C, for a period of, e.g., about 1 - 20 minutes, preferably about 3 - 10 minutes.

In a next step (c), the modified polyimide resin film containing the positive metal ions doped therein is subjected to heat treatment in a reducing gas such that the positive metal ions are reduced to form metal nanoparticles made up of aggregated metal atoms, and to restore the cleaved imide ring in the modified polyimide resin film by dehydrating condensation, to thereby form, in the polyimide resin film, a metal-nanoparticle dispersed layer in which the metal nanoparticles are dispersed. Then, the volume filling ratio of the metal nanoparticles in the metal nanoparticle composite film is controlled by regulating the thickness of the metal-nanoparticle dispersed layer. As a result, the metal nanoparticle composite film having the desired properties is obtained.

In the above-cited Non-Patent Documents, the inventors reported that the diameter of the metal nanoparticle in the composite film can be controlled by regulating the temperature of the heat treatment in the reducing gas. As a result of subsequent studies, however, the inventors have found that the volume filling ratio of the metal nanoparticles can be controlled independently of the particle diameter by regulating the thickness of the metal-nanoparticle dispersed layer formed in the composite film.

The independent control of the particle diameter is based on the principle utilizing such a property that the polyimide resin serving as a matrix is shrunk with thermal decomposition by performing another heat treatment after the formation of the metal-nanoparticle dispersed layer. In other words, the volume filling ratio of the metal nanoparticles is controlled by regulating the thickness of the matrix instead of controlling the array of the metal nanoparticles.

As a method for regulating the thickness of the metal-nanoparticle dispersed layer, there is (1) a method for regulating the thickness of the nanoparticle dispersed layer by controlling a heat treatment time when the thermal reduction treatment is performed in the reducing gas, or (2) a method for regulating the thickness of the metal-nanoparticle dispersed layer by performing the heat treatment in the reducing gas at temperature not lower than the reduction temperature of the metal ions, to thereby form a layer containing the metal nanoparticles dispersed in the polyimide resin, and by performing another heat treatment at temperature different from the temperature of the aforesaid heat treatment, to thereby regulate the thickness of the metal-nanoparticle dispersed layer.

The above method (2) of performing another heat treatment at temperature different from the temperature of the aforesaid first heat treatment in the reducing gas after the formation of the metal-nanoparticle dispersed layer is comparatively preferable because the thickness of the metal-nanoparticle dispersed layer can be more easily regulated. The temperature of the subsequent heat treatment may be set to be either lower or higher than that of the first heat treatment.

When the heat treatment after the formation of the metal-nanoparticle dispersed layer is performed at temperature lower than that of the first heat treatment, the thermal decomposition rate of the polyimide resin is held comparatively low and the volume filling ratio of the metal nanoparticles can be easily controlled. On the other hand, when the heat treatment after the formation of the metal-nanoparticle dispersed layer is performed at temperature higher than that of the first heat treatment, the thermal decomposition rate of the polyimide resin is increased and a time required for the entire process can be cut. Thus, the temperature of the subsequent heat treatment can be optionally selected depending on the metal nanoparticle composite film to be produced.

Additionally, the heat treatment after the formation of the metal-nanoparticle dispersed layer can also be performed in an inert gas, such as a nitrogen gas, instead of the reducing gas.

In the present invention, the volume filling ratio (%) of the metal nanoparticles is calculated, based on the following formula, from an amount of adsorbed metal ions (mol/cm$^2$) which is measured by a chemical analysis.

$$\text{volume filling ratio (\%)} = (\text{amount of adsorbed metal ions} \ (\text{mol/cm}^2) \times \text{metal atomic weight} \times 100) / (\text{metal density (g/cm}^3) \times 10^{-4} \times \text{composite film thickness (}\mu\text{m)})$$

In the present invention, the polyimide resin film in which the nanoparticle dispersed layer are formed can be made of not only a polyimide resin film itself, but also of a member prepared by coating a polyimide resin on the surface of a base made of, e.g., glass, ceramics or metal.

When the polyimide resin film itself is used, the metal-nanoparticle dispersed layer can be formed on one surface or each of both surfaces of the film depending on the treatment conditions. Also, in the case of using the member prepared by coating the polyimide resin on the surface of the base made of, e.g., glass, ceramics or metal, the metal-nanoparticle dispersed layer is formed on one surface of the polyimide resin film.

The reducing gas used in the present invention is not limited to particular one, and can be, e.g., a hydrogen gas or a diborane gas. Usually, the hydrogen gas is used. The temperature and time of the heat treatment performed in the reducing gas can be selected depending on the kind of the reducing gas used, the kind of the metal doped in the polyimide resin film, the properties of the composite film to be produced, and so on.

By performing the heat treatment in the reducing gas, the metal ions coupled or adsorbed in a region of about several microns from the surface of the polyimide resin film are controlled to be kept from diffusing toward the resin film surface. Conversely, those metal ions are forced to diffuse into the interior of the resin film while the reduction reaction is progressed.

As a result, the metal-nanoparticle dispersed layer is formed in which very fine metal particles each having a diameter of about several nanometers are uniformly dispersed in the resin matrix in a region of several tens nanometers to several microns from the resin film surface. When two or more kinds of metal ions are doped in the polyimide resin, fine alloy particles are formed by the heat treatment.

Steps of performing the heat treatment in two stages will be described in more detail below, by way of example, in connection with the case of producing a nickel nanoparticle composite film by using a hydrogen gas as the reducing gas.

Because the reduction completion temperature of Ni ions in a hydrogen atmosphere is about 320 °C, the heat treatment of the first stage is performed in the hydrogen atmosphere at 320 °C. As a result, Ni particles are formed in the composite film. The diameter of the Ni particle is about 5 nm in the film treated with KOH for 2 minutes and is about 8 nm in the film treated for 7 minutes.

After the formation of the Ni particles, the heat treatment of the second stage is performed. With the heat treatment of the second stage, polyimide constituting the matrix is thermally decomposed and causes a mass loss. Accordingly, the relative volume of the matrix is reduced, and the volume filling ratio of the Ni nanoparticles is increased. The heat treatment temperature in the second stage can be set to, for example, about 280 °C, i.e., a value lower than 320 °C that is the heat treatment temperature in the first stage. Conversely, the heat treatment temperature in the second stage can also be set to, for example, about 350 °C, i.e., a value higher than the heat treatment temperature in the first stage.

Performing the heat treatment of the second stage at a comparatively low temperature is advantageous in that the thermal decomposition rate of the polyimide is held low and the volume filling ratio is easier to control. Also, performing the heat treatment of the second stage at a comparatively higher temperature is advantageous in that the thermal decomposition rate is increased and a time required for the process can be cut.

Further, the atmosphere gas used in the heat treatment of the second stage is not limited to the hydrogen gas and may be an inert gas, such as a nitrogen gas. During the heat treatment of the second stage, the diameter of the Ni particle is kept constant. Hence, by performing the two-stage heat treatment and controlling the temperature and time of the heat treatment of the second stage, only the volume filling ratio can be controlled while keeping the diameter of the Ni nanoparticle constant.

According to the present invention, in the case of using a polyimide resin film itself as the polyimide resin film in which the metal nanoparticle composite film is to be formed, when front and rear surfaces of the polyimide resin film are evenly subjected to the heat treatment in the reducing gas, a metal nanoparticle composite film can be obtained in which the metal-nanoparticle dispersed layers having the same thickness are formed on the front and rear surfaces of the composite film.

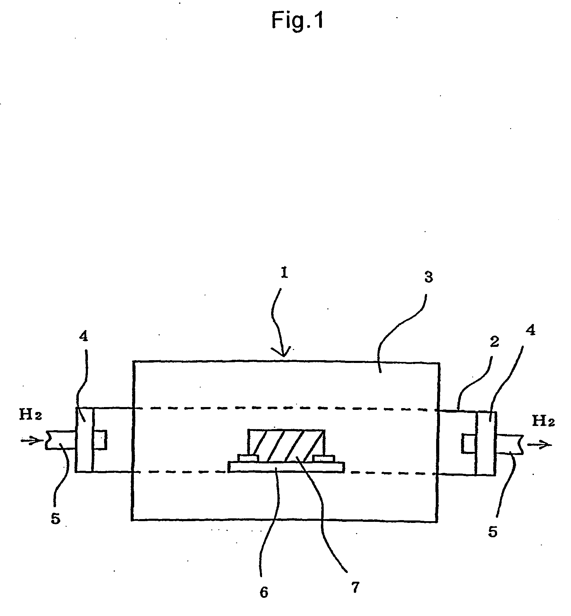

In order to evenly perform the heat treatment of the front and rear surfaces of the polyimide resin film in the reducing gas, the heat treatment is carried out by using a composite film producing apparatus including a tubular reduction treatment chamber as shown in Fig. 1, for example, such that the reducing gas is evenly brought into contact with the front and rear surfaces of the composite film.

The composite film producing apparatus 1 is constructed by arranging a tubular electric furnace 3 so as to surround a tubular reduction treatment chamber 2 which is made of a heat-resistant material, such as quartz, ceramics or heat-resistant glass. Opposite ends of the reduction treatment chamber 2 are sealed by plugs 4, 4 made of heat-resistant rubber, for example. Pipes 5, 5 are fixed respectively to the plugs 4, 4 such that the reducing gas, e.g., the hydrogen gas, is introduced to and discharged out of the reduction treatment chamber 2. A sample stage 6 made of a heat-resistant material, e.g., ceramics, is disposed inside the reduction treatment chamber 2. A polyimide resin film 7 to be heat-treated is placed on the sample stage 6 parallel to the longitudinal direction of the reduction treatment chamber 2.

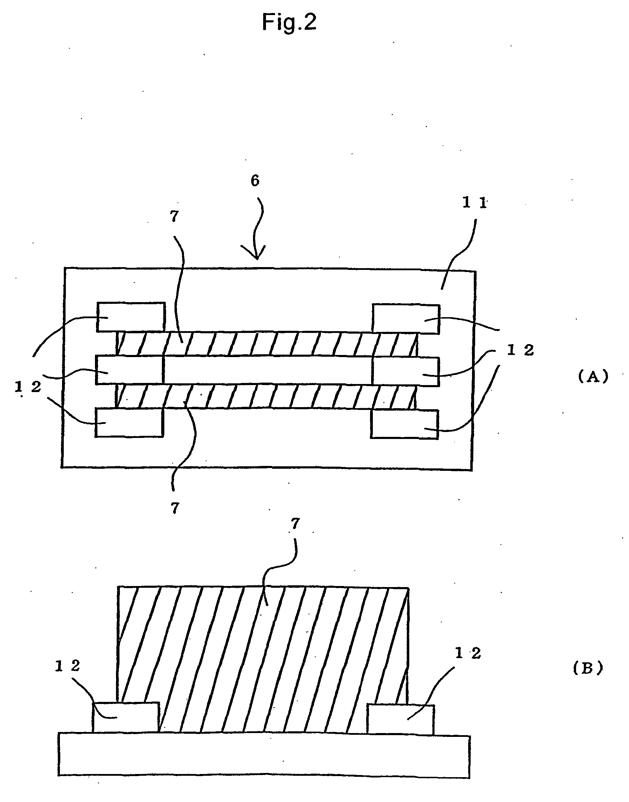

Fig. 2 shows one example of the sample stage disposed inside the reduction treatment chamber; specifically, Fig. 2(A) is a plan view and Fig. 2(B) is a front view.

The sample stage 6 is constructed by providing six stands 12 on a base plate 11. The polyimide resin film 7 is held on the sample stage 6 to erect vertically with one side of the resin film 7 sandwiched between the stands 12.

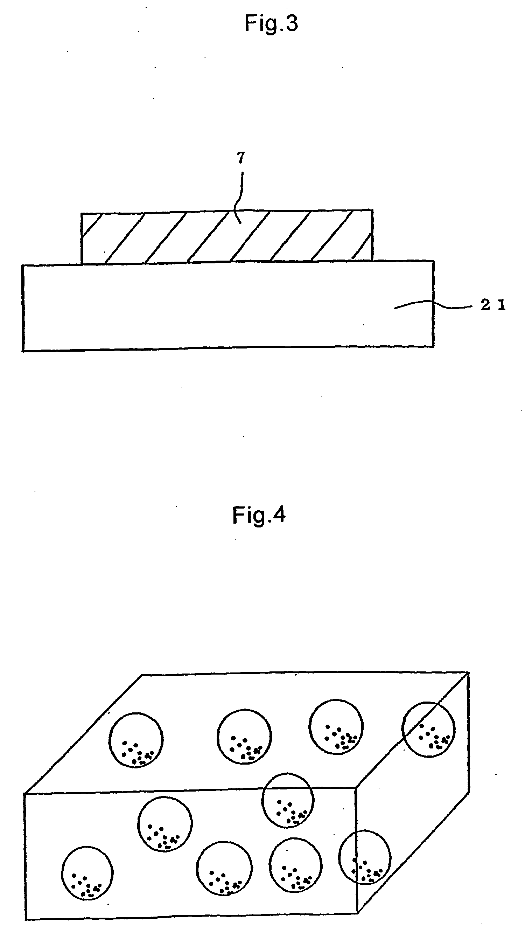

In a sample stage used in the prior art, as shown in Fig. 3, the resin film 7 is simply rested on a base 21 in the form of a flat plate. Therefore, it was impossible to evenly heat the front and rear surfaces of the resin film 7, and to evenly bring the reducing gas into contact with the front and rear surfaces.

In the present invention, by using the sample stage 6 having the above-described construction, the heat treatment is performed in such a state that the polyimide resin film 7 is arranged to erect on the sample stage 6 with its one side held in a sandwiched way and to extend parallel to the longitudinal direction of the reduction treatment chamber 2. It is therefore possible to evenly heat the front and rear surfaces of the resin film 7, and to evenly bring the reducing gas into contact with the front and rear surfaces. Additionally, the above-described apparatus for producing the composite film can also be employed to produce a composite film using, as the matrix, other suitable resin than the polyimide resin, or a composite film using a resin film which is formed by coating the polyimide resin, etc. on the surface of a base made of, e.g., glass, ceramics or metal,

Fig. 5 shows one example of photos taken by a transmission electron microscope and representing a cross-section of the metal nanoparticle composite film produced by using the apparatus shown in Fig. 1, which includes the sample stage shown in Fig. 2; specifically, Fig. 5(A) shows a cross-section of the composite film on the front side and Fig. 5(B) shows a cross-section of the composite film on the rear side.

Also, Fig. 6 shows photos taken by the transmission electron microscope and representing a cross-section of the metal nanoparticle composite film produced by using the prior-art apparatus, which includes the sample stage shown in Fig. 3; specifically, Fig. 6(A) shows a cross-section of the composite film on the front side and Fig. 6(B) shows a cross-section of the composite film on the rear side.

In each of those photos, a layer positioned between two arrows represents the metal-nanoparticle dispersed layer. In the composite film shown in Fig. 5 and produced by using the apparatus shown in Fig. 1, both the metal-nanoparticle dispersed layers formed on the front side (A) and the rear side (B) have the same thickness. On the other hand, in the composite film shown in Fig. 6 and produced by using the prior-art apparatus shown in Fig. 3, the metal-nanoparticle dispersed layers formed on the front side (A) and the rear side (B) apparently differ in thickness from each other.

Thus, a composite film having even properties on both the front and rear sides can be obtained with the apparatus shown in Fig. 1, but it is very difficult to obtain such a composite film with the prior-art apparatus.

While the sample stage 6 shown in Fig. 2 includes six stands 12 provided on the base plate 11 and holds two polyimide resin films 7 between three pairs of stands 12 in a sandwiched way, the number of the stands 12 and the number of the sandwiched resin films 7 can be of course optionally selected as required. The dimensions and shapes of the stands 12 and the resin films 7 are also optionally selectable as required. For example, two stands 12 shown in Fig. 2(B) may be modified into one integral stand so as to hold the lower side of the resin film 7 over its entire length.

The metal nanoparticle composite film produced by using the above-described sample stage 6 can be obtained as a composite film having uniform properties by partially cutting portions of the composite film which have been sandwiched between the stands 12 of the sample stage 6, or by cutting the composite film along the entire length of its one side at which the composite film has been held.

According to the present invention, by controlling the heat treatment time when the thermal reduction treatment is performed in the reducing gas by using the apparatus shown in Fig. 1, for example, a composite film can be obtained in which the metal-nanoparticle dispersed layers having the same thickness and each having the desired volume filling ratio of the metal nanoparticles are formed on both the front and rear surfaces of the polyimide resin film.

Also, according to the present invention, through the steps of, when the thermal reduction treatment is performed in the reducing gas, performing the heat treatment at temperature not lower than the reduction temperature of metal ions in the reducing gas, to thereby form a layer containing the metal nanoparticles dispersed in a polyimide resin, and performing another heat treatment at temperature different from the temperature of the aforesaid heat treatment, to thereby regulate the thickness of the metal-nanoparticle dispersed layer, a composite film can be obtained in which the metal-nanoparticle dispersed layer is formed with the desired volume filling ratio of the metal nanoparticles.

Those composite films have characteristics not obtained with the prior art, and can be used in a wide range of fields including magnetic recording media, electronic parts, etc.

The present invention will be described in more detail below with reference to Examples, but the following Examples are not purported to limit the present invention.

Reference Example 1: Control of volume filling ratio by control of heat treatment time)

By immersing a polyimide resin film (trade name "Kapton 200-H" made by Dupont) with a thickness of 50 $\mu$m in an aqueous solution of potassium hydroxide of 5 mol/liter at 50 °C for 5 minutes, a carboxyl group was introduced to the surface of the polyimide resin film.

Then, after washing the treated film with ion-exchanged water for 2 minutes, the film was immersed in an aqueous solution of nickel chloride of 0.5 mol/liter at room temperature for 5 minutes, whereby nickel ions were doped in the polyimide resin film.

After washing the doped film with ion-exchanged water for 2 minutes, the film was supported on the sample stage, shown in Fig. 2, with its one side held in a sandwiched way and was arranged in the apparatus, shown in Fig. 1, so as to extend parallel to the longitudinal direction of the tubular reduction treatment chamber. Then, a hydrogen gas was introduced to the reduction treatment chamber and the heat treatment was performed at 300 °C for 30 minutes, thereby producing a composite film containing nickel nanoparticles dispersed in the polyimide resin film.

Fig. 5 shows a photo image of the thus-produced composite film, which was taken by the transmission electron microscope. In Fig. 5, Fig. 5(A) shows a cross-sectional photo image of the composite film on the front side and Fig. 5 (B) shows a cross-sectional photo image of the composite film on the rear side.

(Reference Example 2)

A composite film containing metal nanoparticles dispersed in a polyimide resin film was produced in the same manner as in Reference Example 1 except that the sample stage shown in Fig. 3 was used instead of the sample stage shown in Fig. 2 and used in Reference Example 1.

Fig. 6 shows a photo image of the thus-produced composite film, which was taken by the transmission electron microscope. In Fig. 6, Fig. 6(A) shows a cross-sectional photo image of the composite film on the front side and Fig. 6 (B) shows a cross-sectional photo image of the composite film on the rear side.

In each of those photo images, a layer positioned between two arrows represents the metal-nanoparticle dispersed layer. In the composite film shown in Fig. 5 and produced according to Reference Example 1, both the nickel-nanoparticle dispersed layers formed on the front side (A) and the rear side (B) have the same thickness. On the other hand, in the composite film shown in Fig. 6 and produced according to Reference Example 2, the nickel-nanoparticle dispersed layers formed on the front side (A) and the rear side (B) apparently differ in thickness from each other.

(Reference Example 1)

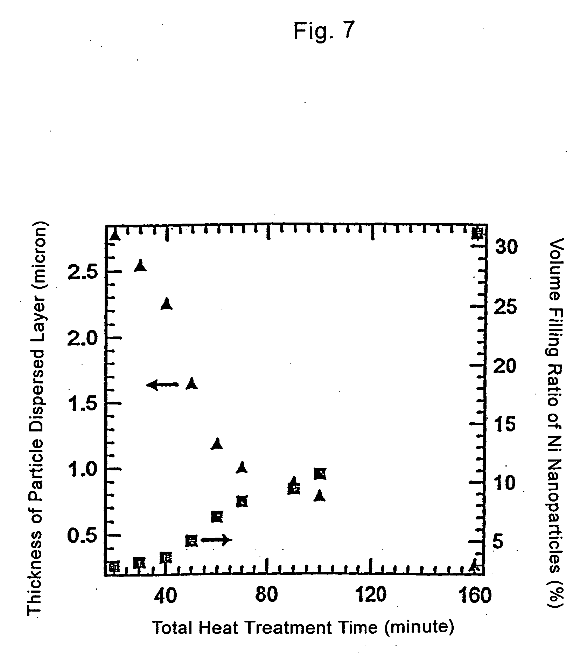

To examine the relationship between the heat treatment time in the hydrogen gas and the volume filling ratio of the metal nanoparticles in the composite film, composite films were produced while changing the heat treatment time in the hydrogen gas in Reference Example 1. Fig. 7 shows the thickness of the nickel-nanoparticle dispersed layer estimated from the cross-sectional photo image of each of the produced composite films, which was taken by the transmission electron microscope, and also shows the relationship between the volume filling ratio of the nickel nanoparticles and the total heat treatment time, which was estimated from the thickness of the nickel-nanoparticle dispersed layer.

In Fig. 7, the horizontal axis represents the total heat treatment time (minute). Also, a mark ▲ represents the thickness of the nicke-I nanoparticle dispersed layer (as indicated in the left-side vertical axis in Fig. 7), and a mark ■ represents the volume filling ratio of the nickel nanoparticles (as indicated in the right-side vertical axis in Fig. 7).

As seen from Fig. 7, with the lapse of the heat treatment time, the thickness of the nanoparticle dispersed layer is reduced and the volume filling ratio is increased. Accordingly, the volume filling ratio of the nanoparticles can be controlled by regulating the thickness of the nanoparticle dispersed layer.

The following description is made of examples in which the thermal reduction treatment in the reducing gas is performed in two stages to regulate the thickness of the metal-nanoparticle dispersed layer, thereby producing a composite film in which the metal-nanoparticle dispersed layer having the desired volume filling ratio of the metal nanoparticles is formed.

(Example 1: Heat treatment of first stage)

By immersing a polyimide resin film (trade name "Kapton 200-H" made by Dupont) with a thickness of 50 μm in an aqueous solution of potassium hydroxide of 5 mol/liter at 50 °C for 7 minutes, a carboxyl group was introduced to the surface of the polyimide resin film.

Then, after washing the treated film with ion-exchanged water for 2 minutes, the film was immersed in an aqueous solution of nickel chloride of 0.5 mol/liter at room temperature for 5 minutes, whereby nickel ions were doped in the polyimide resin film.

After washing the doped film with ion-exchanged water for 2 minutes, the film was supported on the sample stage, shown in Fig. 2, with its one side held in a sandwiched way and was arranged in the apparatus, shown in Fig. 1, so as to extend parallel to the longitudinal direction of the tubular reduction treatment chamber. Then, a hydrogen gas was introduced to the reduction treatment chamber and the heat treatment was performed at 320 °C for 5 minutes, thereby producing a composite film (hereinafter referred to as a "sample 1") containing nickel nanoparticles dispersed in the polyimide resin film.

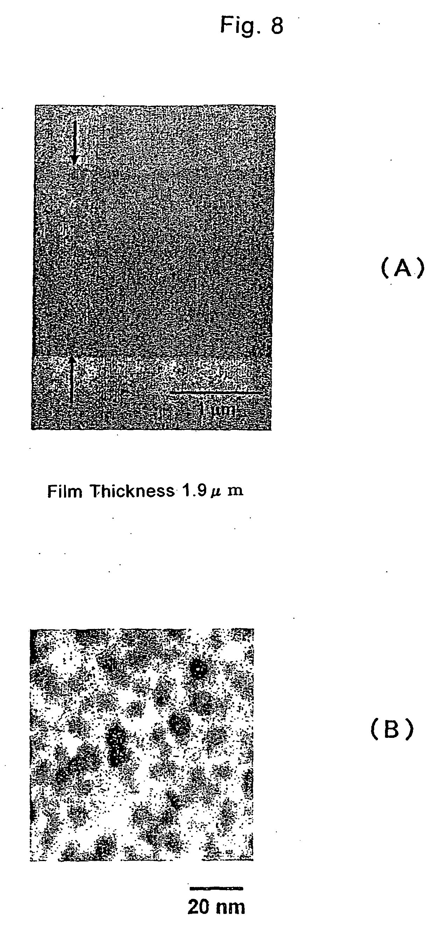

Fig. 8(A) shows a photo image of the sample 1 near its surface on one side, which was taken by the transmission electron microscope. In Fig. 8(A), a layer positioned between two arrows represents the nickel-nanoparticle dispersed layer. The thickness of the nickel-nanoparticle dispersed layer in the sample 1 is 1.9 μm. Also, Fig. 8(B) shows a photo image of the nickel-nanoparticle dispersed layer in Fig. 8(A) with a high magnification. As shown, the presence of nickel nanoparticles can be confirmed. The diameter of the nickel nanoparticle was about 8 nm.

In addition, another nickel-nanoparticle dispersed layer similar to the above-described one was also formed on the opposite surface of the sample 1.

While the diameter of the nickel nanoparticle was about 8 nm in this example by performing the heat treatment of the polyimide resin film after treating in the aqueous solution of potassium hydroxide for 7 minutes, the nanoparticle diameter after the heat treatment of the first stage can be changed by regulating the treatment time in the aqueous solution of potassium hydroxide.

Composite films were produced by performing the same treatment as in the case of the sample 1 except for changing the treatment time in the aqueous solution of potassium hydroxide (KOH), and the diameter of the nickel nanoparticle in each of the produced composite films was estimated based on observation using an electron microscope.

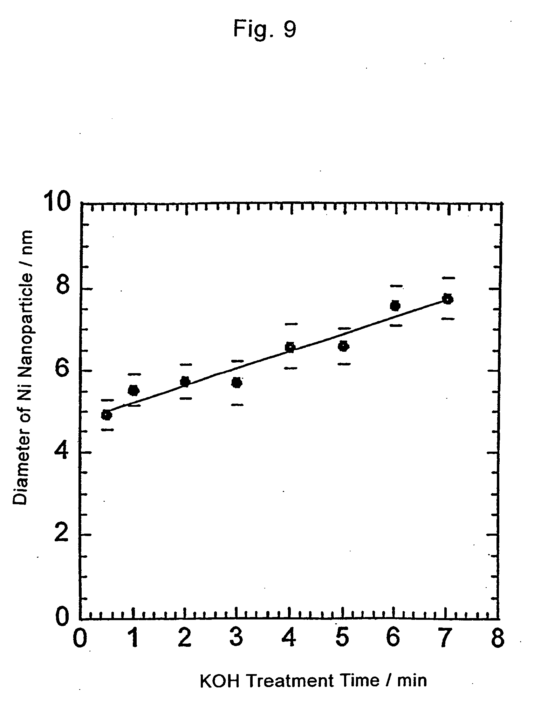

Fig. 9 shows changes in diameter of the nickel nanoparticle with respect to the KOH treatment time. As seen from Fig. 9, by changing the KOH treatment time from 0.5 minute to 7 minutes, the diameter of the nickel nanoparticle can be changed from about 5 nm to about 8 nm.

(Example 2: One kind of heat treatment of second stage)

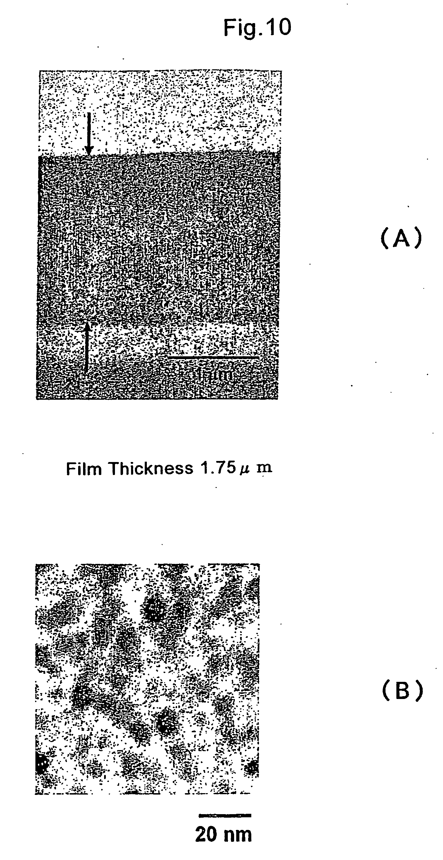

The sample 1 obtained in Example 3 was further subjected to heat treatment in a nitrogen atmosphere at 310°C for 8 hours, whereby a composite film (hereinafter referred to as a "sample 2") was produced. Fig. 10(A) shows a cross-sectional photo image of the sample 2 near its surface on one side, which was taken by the transmission electron microscope. In Fig. 10(A), a layer positioned between two arrows represents the nickel-nanoparticle dispersed layer. The thickness of the nickel-nanoparticle dispersed layer in the sample 2 is 1.75 $\mu$m. Thus, with the heat treatment of the second stage, the thickness of the nanoparticle dispersed layer is reduced from that in the sample 1. Fig. 10(B) shows a photo image of the nickel-nanoparticle dispersed layer in Fig. 10(A) with a high magnification. As shown, the diameter of the nickel nanoparticle was hardly changed with the heat treatment of the second stage.

(Example 3: Another kind of heat treatment of second stage)

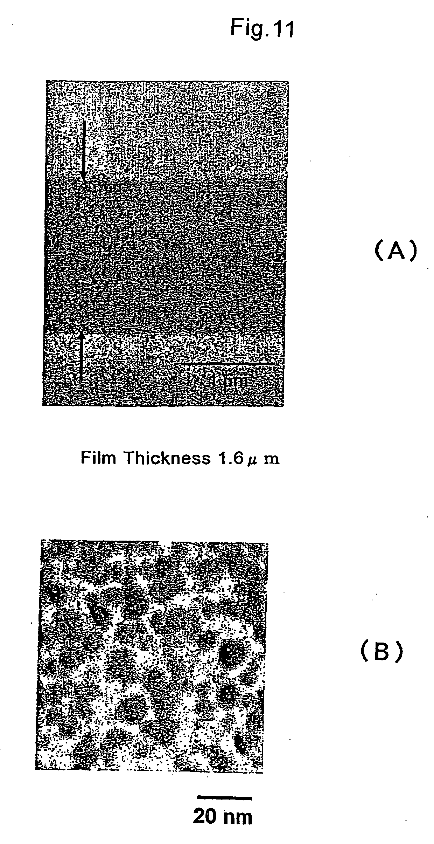

The sample 1 obtained in Example 1 was further subjected to heat treatment in a nitrogen atmosphere at 350 °C for 1 hours, whereby a composite film (hereinafter referred to as a "sample 3") was produced. Fig. 11 (A) shows a cross-sectional photo image of the sample 3 near its surface on one side, which was taken by the transmission electron microscope. In Fig. 11(A), a layer positioned between two arrows represents the nickel-nanoparticle dispersed layer. The thickness of the nickel-nanoparticle dispersed layer in the sample 3 is 1.6 $\mu$m. Thus, it was confirmed that the thickness of the nickel-nanoparticle dispersed layer, i.e., the volume filling ratio of the nanoparticles, can be controlled in a shorter time by performing the heat treatment of the second stage at higher temperature than the heat treatment of the first stage.

Fig. 11(B) shows a photo image of the nickel-nanoparticle dispersed layer in Fig. 11 (A) with a high magnification. As shown, the diameter of the nickel nanoparticle was hardly changed with the heat treatment of the second stage.

From Examples 1 to 3 described above, it is apparent that the diameter and the volume filling ratio of the nanoparticles in the metal nanoparticle composite film can be controlled independently of each other by performing the thermal reduction treatment in the reducing gas in two stages.

Examples 1 to 3 were described above in connection with the case of using a polyimide resin film itself as the polyimide resin film in which the metal-nanoparticle dispersed layer is to be formed, and forming the metal-nanoparticle dispersed layers on both surfaces of the film. However, a film prepared by coating the polyimide resin on the surface of a base made of, e.g., glass, ceramics or metal, can also be of course used as the polyimide resin film in which the metal-nanoparticle dispersed layer is to be formed.

Industrial Applicability

According to the present invention, since the particle diameter and the volume filling ratio of the metal nanoparticles in the metal nanoparticle composite film can be controlled independently of each other, it is possible to easily and efficiently produce the metal-nanoparticle dispersed layer having the desired particle diameter and the desired volume filling ratio.

Since the ferromagnetic metal nanoparticle composite film obtained with the present invention has superior characteristics in points of, for example, exhibiting ferromagnetism up to a temperature closer to room temperature, the composite film can be applied to various industrial fields including an ultra-high density magnetic recording medium, a magnetic noise absorbing material utilizing magnetic resonance, etc.

**Claims**

1.   A process for producing a metal nanoparticle composite film containing metal nanoparticles dispersed in a polyimide resin film, the process comprising the steps of (a) introducing carboxyl groups into the polyimide resin film by treating the polyimide resin film with an alkali aqueous solution, (b) doping the metal ions in the resin film by bringing the resin film into contact with a solution containing metal ions, and (c) producing the metal nanoparticle composite film containing the metal nanoparticles dispersed in the polyimide film by performing thermal reduction treatment in a reducing gas at a temperature not lower than the reduction temperature of the metal ions and performing another heat treatment at a temperature different from the temperature of the aforesaid heat treatment, wherein the volume filling ratio of the metal nanoparticles in the composite film is controlled by regulating the thickness of a nanoparticle dispersed layer formed in the polyimide resin film with the thermal reduction treatment in the reducing gas in said step (c).

2. A process for producing a metal nanoparticle composite film according to Claim 1, wherein the heat treatment after the formation of the metal-nanoparticle dispersed layer is performed at a temperature lower than the temperature at which the metal-nanoparticle dispersed layer has been formed.

3. A process for producing a metal nanoparticle composite film according to Claim 1, wherein the heat treatment after the formation of the metal-nanoparticle dispersed layer is performed at a temperature higher than the temperature at which the metal-nanoparticle dispersed layer has been formed.

4. A process for producing a metal nanoparticle composite film according to any one of Claims 1 to 3, wherein the heat treatment after the formation of the metal-nanoparticle dispersed layer is performed in an inert gas.

5. A process for producing a metal nanoparticle composite film according to any one of Claims 1 to 4, wherein an aqueous solution of potassium hydroxide or sodium hydroxide is used as the alkali aqueous solution in said step (a).

6. A process for producing a metal nanoparticle composite film according to any one of Claims 1 to 5, wherein the solution containing the metal ions used in said step (b) contains one or more kinds of metal ions selected from among nickel, cobalt and iron.

7. A process for producing a metal nanoparticle composite film according to any one of Claims 1 to 6, wherein the reducing gas used in said step (c) is a hydrogen gas.

**Patentansprüche**

1. Verfahren zur Herstellung eines Metallnanopartikelverbundfilms, die Metallnanopartikel dispergiert in einer Polyimidharzfilm enthält, wobei das Verfahren die Schritte umfasst von (a) Einbringen von Carboxylgruppen in den Polyimidharzfilm durch Behandeln des Polyimidharzfilms mit einer wässrigen Alkalilösung, (b) Dotieren der Metall-lionen in den Harzfilm durch in Kontakt bringen des Harzfilms mit einer Metallionen enthaltenden Lösung, und (c) Herstellen des Metallnanopartikelverbundfilms, die Metallnanopartikel dispergiert in dem Polyimidfilm enthält, durch Durchführen einer thermischen Reduktionsbehandlung in einem reduzierenden Gas bei einer Temperatur, die nicht geringer als die Reduktionstemperatur der Metallionen ist, und Durchführen einer anderen Wärmebehandlung bei einer Temperatur, die unterschiedlich zu der Temperatur der vorher erwähnten Wärmebehandlung ist, wobei das Volumenfüllungsverhältnis der Metallnanopartikel in dem Verbundfilm durch Einstellen der Dicke einer Schicht von dispergierten Nanopartikeln gesteuert wird, die in dem Polyimidharzfilm mit der thermischen Reduktionsbehandlung in dem reduzierenden Gas in dem Schritt (c) gebildet wird.

2. Verfahren zur Herstellung eines Metallnanopartikelverbundfilms nach Anspruch 1, wobei die Wärmebehandlung nach der Bildung der Schicht der dispergierten Metallnanopartikel bei einer Temperatur durchgeführt wird, die geringer als die Temperatur ist, bei welcher die Schicht der dispergierten Metallnanopartikel gebildet wurde.

3. Verfahren zur Herstellung eines Metallnanopartikelverbundfilms nach Anspruch 1, wobei die Wärmebehandlung nach der Bildung der Schicht der dispergierten Metallnanopartikel bei einer Temperatur durchgeführt wird, die höher als die Temperatur ist, bei welcher die Schicht der dispergierten Metallnanopartikel gebildet wurde.

4. Verfahren zur Herstellung eines Metallnanopartikelverbundfilms nach einem der Ansprüche 1 bis 3, wobei die Wärmebehandlung nach der Bildung der Schicht der dispergierten Metallnanopartikel in einem Inertgas durchgeführt wird.

5. Verfahren zur Herstellung eines Metallnanopartikelverbundfilms nach einem der Ansprüche 1 bis 4, wobei eine wässrige Lösung von Kaliumhydroxid oder Natriumhydroxid als die wässrige Alkalilösung in dem Schritt (a) verwendet wird.

6. Verfahren zur Herstellung eines Metallnanopartikelverbundfilms nach einem der Ansprüche 1 bis 5, wobei die in dem Schritt (b) verwendete, die Metallionen enthaltende Lösung eine oder mehrere Sorten von Metallionen ausgewählt aus Nickel, Kobalt und Eisen enthält.

**7.** Verfahren zur Herstellung eines Metallnanopartikelverbundfilms nach einem der Ansprüche 1 bis 6, wobei das in dem Schritt (c) verwendete reduzierende Gas ein Wasserstoffgas ist.

**Revendications**

**1.** Procédé de production d'un film composite de nanoparticules de métal contenant des nanoparticules de métal dispersées dans un film de résine polyimide, le procédé comprenant les étapes consistant à (a) introduire des groupes carboxyle dans le film de résine polyimide en traitant le film de résine polyimide avec une solution aqueuse basique, (b) doper le film de résine aux ions métalliques en amenant le film de résine en contact avec une solution contenant des ions métalliques, et (c) produire le film composite de nanoparticules de métal contenant les nanoparticules de métal dispersées dans le film de polyimide en réalisant un traitement de réduction thermique dans un gaz réducteur à une température non inférieure à la température de réduction des ions métalliques et en réalisant un autre traitement thermique à une température différente de la température du traitement thermique susmentionné, dans lequel le rapport de remplissage volumique des nanoparticules de métal dans le film composite est ajusté en régulant l'épaisseur d'une couche dispersée de nanoparticules dans le film de résine polyimide avec le traitement de réduction thermique dans le gaz réducteur à ladite étape (c).

**2.** Procédé de production d'un film composite de nanoparticules de métal selon la revendication 1, dans lequel le traitement thermique après la formation de la couche dispersée de nanoparticules de métal est réalisé à une température inférieure à la température à laquelle la couche dispersée de nanoparticules de métal a été formée.

**3.** Procédé de production d'un film composite de nanoparticules de métal selon la revendication 1, dans lequel le traitement thermique après la formation de la couche dispersée de nanoparticules de métal est réalisé à une température supérieure à la température à laquelle la couche dispersée de nanoparticules de métal a été formée.

**4.** Procédé de production d'un film composite de nanoparticules de métal selon l'une quelconque des revendications 1 à 3, dans lequel le traitement thermique après la formation de la couche dispersée de nanoparticules de métal est réalisé dans un gaz inerte.

**5.** Procédé de production d'un film composite de nanoparticules de métal selon l'une quelconque des revendications 1 à 4, dans lequel une solution aqueuse d'hydroxyde de potassium ou d'hydroxyde de sodium est utilisée en tant que solution aqueuse basique à ladite étape (a).

**6.** Procédé de production d'un film composite de nanoparticules de métal selon l'une quelconque des revendications 1 à 5, dans lequel la solution contenant les ions métalliques utilisée à ladite étape (b) contient un ou plusieurs types d'ions métalliques choisis parmi le nickel, le cobalt et le fer.

**7.** Procédé de production d'un film composite de nanoparticules de métal selon l'une quelconque des revendications 1 à 6, dans lequel le gaz réducteur utilisé à ladite étape (c) est un gaz hydrogène.

# Fig.1

EP 1 674 509 B1

Fig.2

(A)

(B)

13

# Fig.3

7

2 1

# Fig.4

## Fig. 5

Front Side (A)

Rear Side (B)

2μm

2μm

## Fig.6

Front Side (A)

Rear Side (B)

2μm

2μm

Fig. 7

Fig. 8

(A)

Film Thickness 1.9 $\mu$ m

(B)

20 nm

## Fig. 9

Fig.10

(A)

Film Thickness 1.75 μ m

(B)

20 nm

Fig.11

(A)

Film Thickness 1.6 μ m

(B)

20 nm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1514845 A1
- WO 0166653 A1
- JP 2003082475 A

**Non-patent literature cited in the description**

- *Chem. Mater.,* 2003, vol. 15, 2488-2491
- *Eur. Phys. J. D,* 2003, vol. 24, 377-380